# EUROPEAN PATENT SPECIFICATION

(11) **EP 0 731 028 B1**
(45) Date of publication and mention of the grant of the patent: **04.11.1998**
(21) Application number: 94927100.1
(22) Date of filing: 26.09.1994
(51) Int. Cl.: B65B 57/00, B65B 51/30, B29C 65/00

(54) **SEALING CONDITION MONITORING DEVICE**
ÜBERWACHUNGSEINRICHTUNG VON SIEGELBEDINGUNGEN
DISPOSITIF DE CONTROLE DE L'ETAT DE SCELLEMENT

(30) Priority: 24.09.1993 JP 237878/93
(43) Date of publication of application: 11.09.1996
(73) Proprietor: TETRA LAVAL HOLDINGS & FINANCE SA, 1009 Pully (CH)
(72) Inventor: PAPINA, Jan, Tokyo 145 (JP); OTSUKA, Yuzo, Tokyo 154 (JP)
(74) Representative: Müller, Hans-Jürgen, Dipl.-Ing.
(86) International application number: JP9401577
(87) International publication number: WO9508478

(56) References cited:
- DE-A- 3 214 306
- JP-A- 3 148 427
- JP-A- 4 142 231
- JP-U- 4 132 010
- JP-Y- 3 030 244
- US-A- 4 713 047
- PATENT ABSTRACTS OF JAPAN vol. 016, no. 216 (P-1356), 21 May 1992 & JP 04 040333 A (AGENCY OF IND SCIENCE & TECHNOL), 10 February 1992,

## Description

The present invention relates to a sealing condition monitoring apparatus according to the first part of claim 1. Such apparatus is described in JP-A-4 142 231. Pressure sensors are disposed out of the sealing zones of the heat sealing jaw and of the counter jaw, respectively.

In a conventional process for manufacturing a packaging container for liquid foods such as milk and soft drinks, a web-like packaging material made of a flexible laminated material is supplied to a filling apparatus. In the filling apparatus, the packaging material is formed into a tube, to which liquid food is charges and then cut into a brick-like packaging container.

In more detail, the filling apparatus seals the web-like packaging material in the longitudinal direction to form a tube, and continuously feeds in the tube downward. While the tube is fed downward, liquid food is filled into the tube form above. Then, the tube is held at both sides thereof by a sealing/cutting unit and sealed in the lateral or transversal direction of the packaging material at predetermined intervals.

Subsequently, a laterally sealed portion is cut to form a plurality of rectangular containers containing a predetermined amount of liquid food therein, thereby completing the manufacture of packaging containers filled with liquid food.

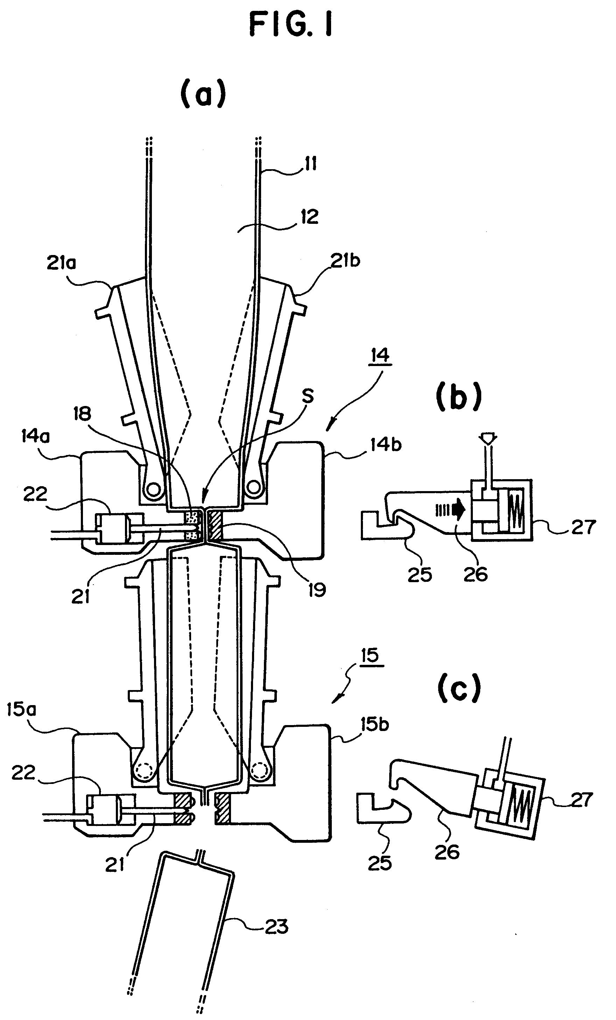

Fig. 1 is a schematic illustration showing a conventional sealing apparatus. In this drawing, section (a) is a schematic illustration showing a forming unit, section (b) is an illustration showing the engaged state of engaging members, and section (c) is an illustration showing the disengaged state of engaging members.

In Fig 1, the reference numeral 11 denotes a packaging material made of a flexible laminated material and formed into a tube by sealing a web-like packaging material in the longitudinal direction. The packaging material 11 is laminated, for example, such that lamination layers thereof are in the order of a polyethylene layer serving as a sealant layer, an adhesive layer, an aluminum foil layer, a paper material and a polyethylene layer, from inside to outside, when a packaging container is formed.

The packaging material 11 is continuously transferred downward, and held and sealed in the lateral direction at predetermined intervals by two sealing/cutting units 14 and 15, for forming a strip-like sealing portion S. During this step, liquid food 12 is charged from above into the packaging material 11.

Then, the sealing portion S is cut to form a rectangular container 23 filled with a predetermined amount of the liquid food 12. For these operations, the sealing/cutting units 14 and 15 have, respectively, counter jaws 14a and 15a and heat sealing jaws 14b and 15b.

A counter bar 18 is attached to the forward end of each of the counter jaws 14a and 15a while an inductor 19 serving as a sealing bar is attached to the forward end of each of the heat sealing jaws 14b and 15b. The counter jaws 14a and 15a and the heat sealing jaws 14b and 15b are advanced to hold the packaging material 11 at the both sides thereof for bringing the sealant layers of the packaging material 11 in contact with each other and sealing in the lateral direction.

At the center of the counter jaws 14a and 15a, a flat cutter 21 extending in the depth direction in the drawing is disposed for free advancing and retracting movement, and cuts the sealing portion S at its center when the cutter 21 is advanced. For advancing and retracting the cutter 21, a cylinder 22 is attached to the backward end of the cutter 21, and an operating medium is fed to and ejected from the cylinder 22.

The reference numerals 21a and 21b denote a pair of forming flaps for enclosing and guiding the packaging material 11. The forming flaps 21a and 21b are pivotably attached to the counter jaws 14a and 15a and the heat sealing jaws 14b and 15b, respectively, and form the packaging material 11 into a rectangle.

In Fig. 1, the sealing/cutting unit 14 is in the position of starting sealing/cutting operation, where the counter jaw 14a and the heat sealing jaw 14b are advanced to hold the packaging material 11 at the opposing walls thereof for bringing the sealant layers of the packaging material 11 in contact with each other.

Then, the sealing/cutting unit 14 moves downward while holding the packaging material 11. During this operation, the inductor 19 disposed at the forward end of the heat sealing jaw 14b and the counter bar 18 disposed at the forward end of the counter jaw 14a strongly press the packaging material 11 at the portion to be sealed, and the inductor 19 generates an eddy current in the aluminum foil layer of the packaging material 11, which in turn generates heat due to the eddy current, so that the packaging material 11 is laterally sealed for forming the sealing portion S. In this case, the packaging material 11 is sealed by induction heat using the inductor 19. On the other hand, the packaging material 11 may be sealed by Joule heat using a resistor.

In Fig. 1, the sealing/cutting unit 15 is in the position where sealing/cutting operation is completed. Immediately before the sealing/cutting unit 15 reaches this position, the cutter 21 of the sealing/cutting unit 15 advances, and cuts the sealing portion S at its center for separating a rectangular container 23 from the packaging material 11.

After the sealing portion S is cut at its center, the counter jaw 15a and heat sealing jaw 15b of the sealing/cutting unit 15 retract, and then, swing upward to the position of starting sealing/cutting operation. When the sealing/cutting unit 15 reaches the position of starting sealing/cutting operation and begins to move the counter jaw 15a and the heat sealing jaw 15b, the cutter 21 of the sealing/cutting unit 14 advances to cut the sealing portion S at its center for separating the rectangular container 23 from the packaging material 11.

Reference numerals 25 and 26 denote a pair of engaging hooks which form an engaging member. The engaging hook 25 is attached to each of the counter jaws 14a and 15a while the engaging hook 26 is attached to each of the heat sealing jaws 14b and 15b. A cylinder 27 is connected to the engaging hook 26.

After the engaging hooks 25 and 26 are engaged with each other, an operating medium is supplied to the cylinder 27 for drawing the counter jaw 14a and the heat sealing jaw 14b toward each other, thereby increasing a pressing force for sealing. In the position of starting the sealing/cutting operation, the engaging hooks 25 and 26 are engaged with each other as shown in section (b) of Fig. 1 while in the position of completing the sealing/cutting operation, the engaging hooks 25 and 26 are disengaged from each other as shown in section (c) of Fig. 1.

In the above-described conventional sealing apparatus, sealing may be defectively carried out due to a foreign matter which enters between the counter bar 18 and the packaging material 11 or between the inductor 19 and the packaging material 11, or due to defectiveness or malfunction which occurs in components of the sealing apparatus, such as the counter bar 18, the inductor 19, the cylinders 22 and 27, and the engaging hooks 25 and 26. However, in the conventional sealing apparatus, such a defective sealing cannot be detected in a real-time manner.

An object of the present invention is to solve the above-mentioned problems of the conventional sealing apparatus, and to provide a sealing condition monitoring apparatus which can detect in a real-time manner a defective sealing which will occur due to entering of a foreign matter, or defectiveness or malfunction of the components of a sealing apparatus.

The invention is claimed in claim 1.

To achieve the object, a sealing condition monitoring apparatus according to the present invention comprises a sheet-shaped pressure sensor being provided on the surface of the counter bar within the sealing zone for detecting the pressing force applied to the packaging material at each of discrete detection points.

Further, there is provided a controller which compares data representing the pressing force detected by the sheet-shaped pressure sensor and master data which are previously set to correspond to a pressing force for obtaining proper sealing conditions.

Accordingly, when a foreign matter enters between the counter bar and the sealing bar and the pressing force exceeds a predetermined threshold value, the controller controls the drive mechanism to stop the sealing apparatus. As a result, the counter bar and the sealing bar are prevented from being damaged.

### BRIEF DESCRIPTION OF DRAWINGS

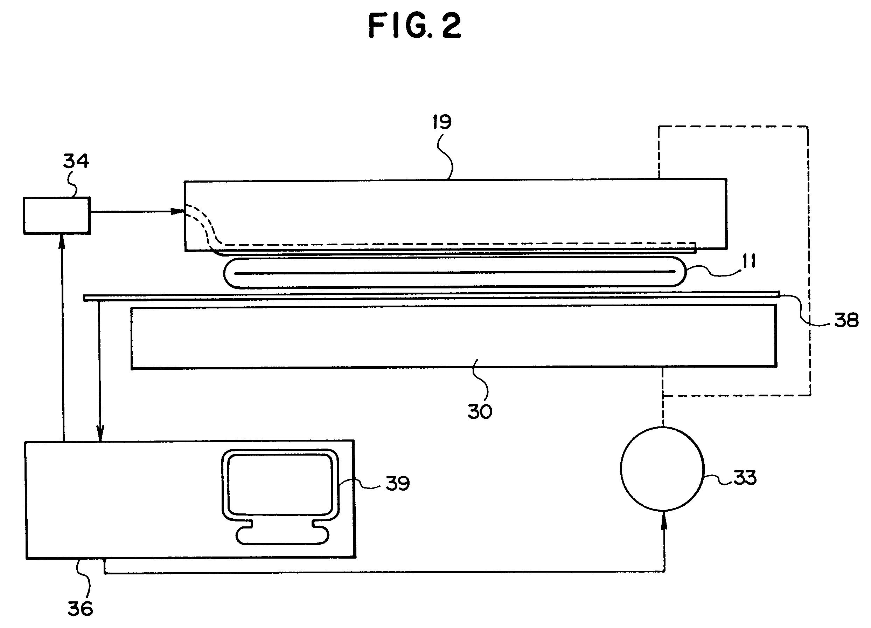

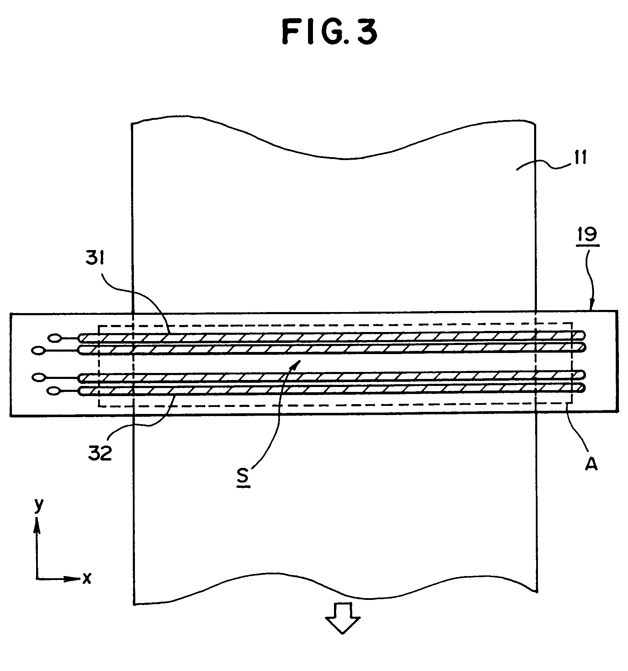

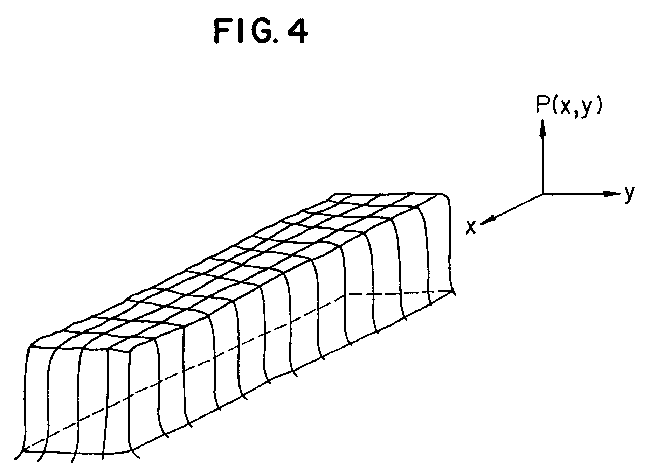

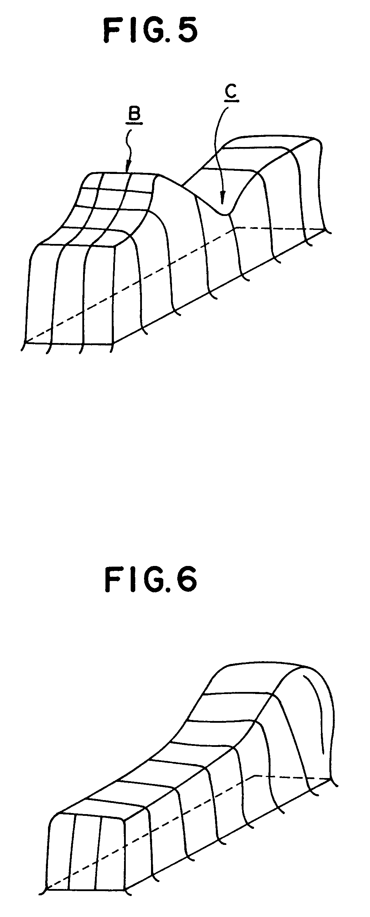

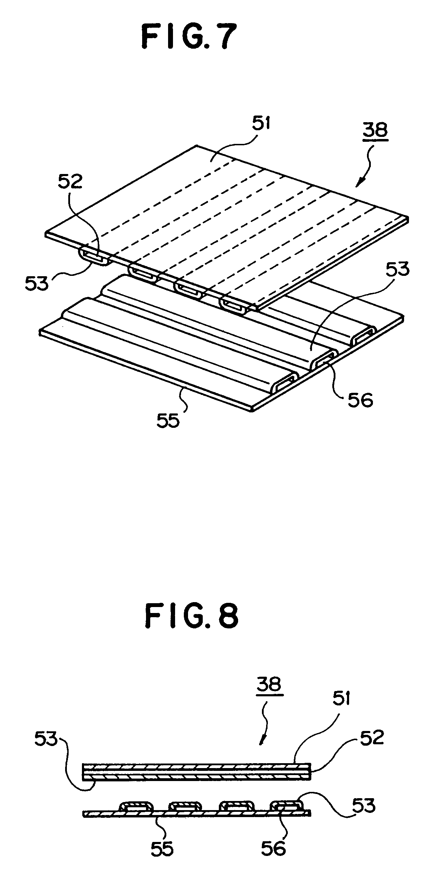

Fig. 1 is a schematic illustration showing a conventional sealing apparatus, wherein section (a) is a schematic illustration showing a forming unit, section (b) is an illustration showing the engaged state of engaging members, and section (c) is an illustration showing the disengaged state of engaging members; Fig. 2 is a schematic illustration of a sealing condition monitoring apparatus showing an embodiment of the present invention; Fig. 3 is a view showing the installed state of an inductor; Fig. 4 is a chart showing a master pattern used in the sealing condition monitoring apparatus according to the embodiment of the present invention; Fig. 5 is a chart showing a first example of a display of the sealing condition monitoring apparatus according to the embodiment of the present invention; Fig. 6 is a chart showing a second example of a display of the sealing condition monitoring apparatus according to the embodiment of the present invention; Fig. 7 is a perspective view of a main portion of a sheet-shaped pressure sensor used in the embodiment of the present invention; and Fig. 8 is a sectional view of the main portion of the sheet-shaped pressure sensor used in the embodiment of the present invention.

### BEST MODE FOR CARRYING OUT THE INVENTION

An embodiment of the present invention will hereinafter be described in detail with reference to the drawings.

Fig. 2 is a schematic illustration of a sealing condition monitoring apparatus showing an embodiment of the present invention, and Fig. 3 is a view showing the installed state of an inductor.

In these drawings, reference numeral 11 denotes a packaging material, which is laminated, for example, such that lamination layers thereof are in the order of a polyethylene layer serving as a sealant layer, a paper material, an adhesive layer, an aluminum foil layer, another adhesive layer and a polyethylene layer, from inside to outside when a packaging container 23 (see Fig. 1) is formed.

Reference numeral 30 denotes a counter bar which is made of steel and is disposed at the forward end of each of the counter jaws 14a and 15a, and reference numeral 19 denotes an inductor serving as a sealing bar which is disposed at the forward end of each of the heat sealing jaws 14b and 15b to face the counter bar 30. The inductor 19 has first and second induction heating bodies 31 and 32. The first induction heating body 31 seals the bottom portion of a packaging container 23 adjacent thereto, while the second induction heating body 32 seals the top portion of another packaging container 23 adjacent thereto.

Each of the counter jaws 14a and 15a and the heat sealing jaws 14b and 15b are connected to a drive mechanism 33, which advances and retracts the counter jaws 14a and 15a and the heat sealing jaws 14b and 15b relative to each other. By an advancing movement, they hold the packaging material 11 at the both sides thereof and apply a pressing force thereto so that facing portions of the sealant layers contact with each other.

A power supply circuit 34 is provided for supplying the first and second induction heating bodies 31 and 32 with a high-frequency voltage during the above-described operations. When the high-frequency voltage is applied to the first and second induction heating bodies 31 and 32, an eddy current flows in the aluminum foil layer of the packaging material 11 due to induction effect so that heat is generated in the aluminum foil layer due to an eddy current loss. As a result, portions of the sealant layers corresponding to the sealing portion S are diffused for sealing. In the present invention, a rectangular packaging container 23 is formed from the packaging material 11 having a tubular shape. However, the present invention may be applied in the case where other types of packaging containers such as a gable-top type packaging container are formed.

The power supply circuit 34 is connected to a controller 36. At a predetermined timing, the controller 36 applies the high-frequency voltage to the first and second induction heating bodies 31 and 32 and controls the value of the voltage.

A sheet-shaped pressure sensor 38 is disposed on the surface of the counter bar 30. The sheet-shaped pressure sensor 38 detects pressing force applied to the packaging material 11 in a detection area A corresponding to the sealing portion S. Moreover, the sheet-shaped pressure sensor 38 separately detects the pressing force P(x, y) at each set of coordinates (x, y) of very small detection points in the detection area A.

In this case, data of the detected pressing force P(x, y) are transmitted to the controller 36. In the controller 36, master data are stored as a master pattern. The master data are previously set to correspond to a pressing force P(x, y) for obtaining proper sealing conditions. The received data of the pressing force P(x, y) are compared with the master data. When the difference between them is considerably large, alarm sound is generated or the sealing apparatus is stopped. The data pattern of the pressing force P(x, y) and the master pattern are always displayed on a display 39 for monitoring. In this case, since the sheet-shaped pressure sensor 38 separately detects the pressing force P(x, y) at each set of coordinates (x, y) of the very small detection points in the detection area A, the location of a foreign matter which has entered between the counter bar 39 and the inductor 19 can be easily detected.

Since the data of the pressing force P(x, y) detected by the sheet-shaped pressure sensor 38 are sent to the controller 36, the controller 36 can also monitor other modules of the filling apparatus, such as a drive unit, a punch unit, a pull-tab sealing apparatus, a bending roller, and a charging unit, thereby carrying out a total control of the filling apparatus.

In the case where a similar monitoring apparatus is provided for each of other modules, a pattern for monitoring the status of each module and a master pattern representing the normal operation of each module may be displayed on the display 39. Further, it is possible to carry out maintenance and control after the filling apparatus has been operated for a long period of time, as well as to monitor the filling apparatus.

Fig. 4 is a chart showing a master pattern used in the sealing condition monitoring apparatus according to the embodiment of the present invention, Fig. 5 is a chart showing a first example of a display of the sealing condition monitoring apparatus according to the embodiment of the present invention, and Fig. 6 is a chart showing a second example of a display of the sealing condition monitoring apparatus according to the embodiment of the present invention.

As shown in these drawings, pressing force P(x, y) is displayed in a three-dimensional shape on the display 39 (Fig. 2) for each set of the coordinates (x, y) of the detection points. Fig. 4 shows a master pattern in which the pressing force P(x, y) applied to the packaging material 11 is uniform. Fig. 5 shows the case where a foreign matter enters between the counter bar 30 and the inductor 19. Assuming that a foreign matter exists in an area B having coordinates (x, y₁), the pressing force P(x, y₁) at the coordinates (x, y₁) increases, while the pressing force P(x, y₂) in an adjacent area C at the coordinates (x, y₂) decreases.

Fig. 6 shows the case where the parallelism of the counter bar 30 or the inductor 19 is lost because the various portions of the sealing apparatus have been worn out due to deterioration over years. In this case, the pressing force P(x, y) applied to the packaging material 11 varies for each sealing operation, or the overall pressing force P(x, y) of the counter bar 30 and the inductor 19 cannot be made uniform. Accordingly, the packaging material 11 cannot be uniformly sealed.

Next, the structure of the sheet-shaped pressure sensor 38 will be described.

Fig. 7 is a perspective view of a main portion of a sheet-shaped pressure sensor used in the embodiment of the present invention, and Fig. 8 is a sectional view of the main portion of the sheet-shaped pressure sensor used in the embodiment of the present invention.

In these drawings, reference numeral 38 denotes a sheet-shaped pressure sensor, reference numeral 51 denotes a row electrode packing seat made of a polyester film or the like. A plurality of row electrodes 52 having a narrow width are formed in parallel on the row electrode packing seat 51. The row electrodes 52 are arranged in the detection area A (Fig. 3) at predetermined intervals along the y-axis, and are coated with a pressure detection ink 53.

Reference numeral 55 denotes a column electrode packing seat made of a polyester film or the like. A plurality of column electrodes 56 having a narrow width are formed in parallel on the column electrode packing seat 55. The column electrodes 56 are arranged in the detection area A at predetermined intervals along the x-axis, and are coated with a pressure detection ink 53.

The present invention is not limited to the above-mentioned embodiment. Numerous modifications and variations of the present invention are possible in light of the spirit of the present invention, and they are not excluded from the scope of the present invention.

### INDUSTRIAL APPLICATION

The present invention is applicable to filling apparatuses used for manufacturing packaging containers from a tubular packaging material.

## Claims

1. Sealing condition monitoring apparatus comprising at least
(a) a counter jaw (14a, 15a);
(b) a heat sealing jaw (14b, 15b) arranged to face said counter jaw (14a, 15a);
(c) a drive mechanism (33) for relatively advancing and retracting said counter jaw (14a, 15a) and said heat sealing jaw (14b, 15b);
(d) a counter bar (18) disposed at the forward end of said counter jaw (14a, 15a);
(e) a sealing bar disposed at the forward end of said heat sealing jaw (14b, 15b) to face said counter bar (18) for holding a packaging material (11) between said sealing bar and said counter bar (18) and applying a pressing force to said packaging material (11) for sealing,
(f) wherein a plurality of pressure sensors is provided on the counter bar (18),
**characterized in that**
(f1) a sheet-shaped pressure sensor (38) is provided through the whole sealing portion on the surface of said counter bar (18) for separately detecting the pressing force applied to said packaging material (11) at each of a multiple of detection points.

2. Sealing condition monitoring apparatus as claimed in claim 1,
**characterized in that**,
said pressure sensor (38) comprises a plurality of parallel row electrodes (52) having a narrow width and a plurality of parallel column electrodes (56) having a narrow width and disposed perpendicular with respect to said row electrodes (58).

3. Sealing condition monitoring apparatus as claimed in claims 1 or 2,
**characterized in that**,
that a controller (36) compares the data representing the pressing force detected by said sheet-shaped pressure sensor (38) and master data which are previously set to correspond to a pressing force for obtaining proper sealing conditions, and controls said drive mechanism (33) based on results of comparison between data of the detected pressing force and the master data.

## Patentansprüche

1. Überwachungsvorrichtung für Versiegelungszustände, die wenigstens folgendes aufweist:
(a) eine Gegenbacke (14a, 15a);
(b) eine Heißsiegelbacke (14b, 15b), die der Gegenbacke (14a, 15a) zugewandt angeordnet ist;
(c) einen Antriebsmechanismus (33) zum relativen Vorschub und Rückzug der Gegenbacke (14a, 15a) und der Heißsiegelbacke (14b, 15b);
(d) einen Gegenstab (18), der am vorderen Ende der Gegenbacke (14a, 15a) angeordnet ist;
(e) ein Versiegelungsstab, der am vorderen Ende der Heißsiegelbacke (14b, 15b) dem Gegenstab (18) zugewandt angeordnet ist, um ein Verpackungsmaterial (11) zwischen dem Versiegelungsstab und dem Gegenstab (18) zu halten und eine Druckkraft auf das Verpackungsmaterial (11) zur Versiegelung anzuwenden,
(f) wobei mehrere Drucksensoren an dem Gegenstab (18) vorgesehen sind,
**dadurch gekennzeichnet**, **daß**
(f1) ein tafelförmiger Drucksensor (38) über den gesamten Versiegelungsabschnitt an der Oberflache des Gegenstabs (18) vorgesehen ist, um separat die Druckkraft zu erfassen, die an jedem oder mehreren Erfassungspunkten auf das Verpackungsmaterial aufgebracht wird.

2. Überwachungsvorrichtung für Versiegelungszustände nach Anspruch 1,
**dadurch gekennzeichnet**, **daß**
der Drucksensor (38) mehrere parallele Zeilenelektroden (52) mit niedriger Breite und mehrere parallele Spaltenelektroden (56) mit niedriger Breite aufweist, die senkrecht zu den Zeilenelektroden (58) angeordnet sind.

3. Überwachungsvorrichtung für Versiegelungszustände nach Anspruch 1 oder 2,
**dadurch gekennzeichnet**, **daß**
ein Regler (36) die Daten, die die von dem tafelförmigen Drucksensor (38) erfaßte Druckkraft darstellen, mit Stammdaten vergleicht, die vorher in Entsprechung zu einer Druckkraft zum Erhalt richtiger Versiegelungszustände eingestellt wurden, und den Antriebsmechanismus (33) auf der Grundlage der Ergebnisse des Vergleichs zwischen Daten der erfaßten Druckkraft und den Stammdaten steuert.

## Revendications

1. Dispositif de contrôle de l'état de scellement comprenant au moins :
(a) une contre-mâchoire (14a,15a) ;
(b) une mâchoire de scellement à chaud (14b, 15b) disposée en regard de ladite contre-mâchoire (14a, 15a) ;
(c) un mécanisme d'entraînement (33) pour faire avancer et reculer l'une par rapport à l'autre ladite contre-mâchoire (14a, 15a) et ladite mâchoire de scellement à chaud (14b,15b) ;
(d) une contre-barre (18) disposée à l'extrémité avant de ladite contre-mâchoire (14a,15a) ;
(e) une barre de scellement disposée à l'extrémité avant de ladite mâchoire de scellement à chaud (14b,15b) pour faire face à ladite contre-barre (18) pour maintenir un matériau d'emballage (11) entre ladite barre de scellement et ladite contre-barre (18) et pour appliquer une force de pression aux dits matériau d'emballage (11) pour le scellement,
(f) dans lequel sont prévus sur la contre-barre (18) plusieurs capteurs de pression ;
caractérisé en ce que
(f1) un capteur de pression en forme de feuille (38) est prévu en travers de toute la partie de scellement sur la surface de ladite contre-barre (18) pour détecter séparément la force de pression appliquée aux dits matériaux d'emballage (11) en chacun de multiples points de détection.

2. Dispositif de contrôle de l'état de scellement selon la revendication 1,
caractérisé en ce que
ledit capteur de pression (38) comprend plusieurs électrodes en rangée (52) présentant une faible largeur et plusieurs électrodes parallèles en colonne (56) présentant une faible largeur et disposées perpendiculairement aux dites électrodes en rangée (58).

3. Dispositif de contrôle de l'état de scellement selon la revendication 1 ou 2,
caractérisé en ce que ,
un contrôleur (36) compare les données représentant la force de pression détectée par ledit capteur de pression en forme de feuille (38) et des données de référence qui sont antérieurement établies pour correspondre à une force de pression permettant d'obtenir des états de scellement appropriés, et commande ledit mécanisme d'entraînement (33) sur la base des résultats de la comparaison entre les données de la force de pression détectée et les données de référence.
